# EUROPEAN PATENT APPLICATION

(11) **EP 4 851 844 A1**
(43) Date of publication of application: **09.12.2026**
(21) Application number: 26183160.6
(22) Date of filing: 04.06.2026
(51) Int. Cl.: G06F 30/12, G06T 19/00, G06F 111/12

(54) **METHOD FOR STORING ANNOTATION DATA FOR A COMPONENT IN TESSELLATION DATA OF A CAD SYSTEM ASSEMBLY**

(30) Priority: 05.06.2025 US 202519229593
(71) Applicant: Dassault Systemes SolidWorks Corporation, Waltham, MA 02451-1223 (US)
(72) Inventor: Birkett-Smith, Nicholas Constantine, Waltham - MA (US); Sinha, Sushant, Pune (IN)
(74) Representative: Bandpay & Greuter

(57) **Abstract**

A method adds dimensions and annotation to tessellation data for an assembly file of an assembly created or edited in a first mode of a computer aided drafting (CAD) environment that saves features data for features of the assembly to the assembly file and/or saves bodies data for bodies of the assembly to the assembly file, and saves tessellation data representing the assembly to the assembly file. The assembly file is opened in a second CAD environment mode that loads the tessellation data from the assembly file without loading the features data and the bodies data and creates a drawing view of the assembly using the tessellation data. A selected edge is received in the drawing view, and a geometry is determined for the selected edge. An annotation or a dimension is received and associated with the selected edge and saved with the tessellation data.

## Description

### FIELD OF THE INVENTION

The present invention relates to computer-aided drafting (CAD), and more particularly, is related to entering dimensions and annotations in two dimensional views of a three dimensional (3D) modeled assembly.

### BACKGROUND OF THE INVENTION

In a CAD environment, 3D geometric models of assemblies are described in computers based on geometric modeling and solid modeling methods. For large and/or complex assemblies, the model data files can be large, resulting in long load times into CAD programs and to resolve the associations between assembly components. Further, some CAD platforms may not have the capacity to load a fully resolved model for a large and/or complex assembly. However, in some instances, the goal of the user may not be to manipulate or access the geometric data of the assembly model, but instead to generate two-dimensional (2D) drawings of the modeled assembly. Here, some CAD programs allow the user to select a mode of operation that only loads the graphical data corresponding to the modeled assembly. However, in the low data mode, the user is unable to add dimensions or annotations for specific aspects of the model without instead loading the fully Resolved model. Therefore, there is a need in the industry to address these shortcomings.

### SUMMARY OF THE INVENTION

Embodiments of the present invention provide a method for annotating a component of an assembly in a CAD System where only tessellation data is loaded. Briefly described, the present invention is directed to a method for adding dimensions and annotation to tessellation data for an assembly file of an assembly created or edited in a first mode of a computer aided drafting (CAD) environment that saves features data for features of the assembly to the assembly file and/or saves bodies data for bodies of the assembly to the assembly file, and saves tessellation data representing the assembly to the assembly file. The assembly file is opened in a second CAD environment mode that loads the tessellation data from the assembly file without loading the features data and the bodies data and creates a drawing view of the assembly using the tessellation data. A selected edge is received in the drawing view, and a geometry is determined for the selected edge. An annotation or a dimension is received and associated with the selected edge and saved with the tessellation data.

It is provided a computer-implemented method for adding dimensions and annotations to an assembly file for an assembly created or edited in a first mode of a computer aided drafting (CAD) environment that saves features data for features of the assembly to the assembly file and/or saves bodies data for bodies of the assembly to the assembly file, and saves tessellation data representing the assembly to the assembly file. The method comprises:
- opening the assembly file in a second CAD environment mode that loads the tessellation data from the assembly file without loading the features data and the bodies data;
- creating a drawing view of at least a portion of the assembly using the tessellation data;
- receiving a selection of a selected edge in the drawing view;
- determining a geometry for the selected edge;
- receiving an annotation or a dimension to associate with the selected edge; and
- saving the annotation or dimension with the tessellation data.

The method may comprise one or more of the following:
- the selected edge comprises a boundary of a face of the assembly;
- the face is one of a group consisting of a planar face, a cylindrical face, a conical face, a toroidal face, and a spherical face;
- determining the geometry for the selected edge is based on the tessellation data associated with the selected edge;
- the selected edge is a line and the geometry for the selected edge comprises a first line endpoint and a second line endpoint;
- the selected edge is a circle and the geometry for the selected edge comprises a center point and a radius;
- annotation or dimension data is associated with an identifier for the selected edge;
- the identifier for the selected edge is the same as an identifier of the edge in the bodies data;
- re-opening the assembly file in the first mode of the CAD environment and accessing the annotations and/or the dimensions in the tessellation data;
- the tessellation data comprises point data for creating a view of a mesh surface of the assembly; and/or
- creating a drawing file from the tessellation data.

It is further provided a computer readable storage medium storing non-transitory instructions which, when executed by a computer, cause the computer to perform a method that adds a dimension and/or annotation to tessellation data for an assembly in a computer aided drafting (CAD) viewer application. The method comprises
- receiving and loading an assembly file comprising the tessellation data created in a CAD environment;
- creating a drawing view of at least a portion of the assembly using the tessellation data;
- receiving a selection of a selected edge in the drawing view;
- determining a geometry for the selected edge from the tessellation data;
- receiving an annotation or a dimension to associate with the selected edge; and
- saving the annotation or dimension with the tessellation data,
wherein the CAD viewer application loads the tessellation data for the assembly without loading data for assembly features or data for assembly bodies.

The computer readable storage medium may comprise one or more of the following:
- the tessellation data comprises tessellation point data for creating the drawing view;
- the selected edge comprises a boundary of a face of the assembly;
- the face is selected from a group consisting of a planar face, a cylindrical face, a conical face, a toroidal face, and a spherical face; and/or
- determining the geometry for the selected edge is based on point data associated with the selected edge.

It is further provided a computer aided drafting (CAD) viewer application configured to execute instructions stored in a computer memory for execution by a processor, comprising:
- receiving and loading an assembly file comprising tessellation data for depicting an assembly created in a CAD environment;
- creating a drawing view of at least a portion of the assembly using the tessellation data;
- receiving a selection of an edge of the assembly in the drawing view;
- determining a geometry for the selected edge from the tessellation data;
- receiving an annotation or a dimension to associate with the selected edge; and
- saving the annotation or dimension with the tessellation data,
wherein the CAD viewer application loads the tessellation data without loading data for assembly features or data for assembly bodies.

The CAD viewer application may comprise one or more of the following:
- the tessellation data comprises tessellation point data for creating the drawing view;
- the selected edge comprises a boundary of a face of the assembly;
- the face is selected from a group consisting of a planar face, a cylindrical face, a conical face, a toroidal face, and a spherical face;
- determining the geometry for the selected edge is based on point data associated with the selected edge.

It is further provided a computer program comprising instructions for performing the method and/or the viewer application. When executed by a processor, the instructions cause the processor to perform the method and/or the viewer application.

It is further provided a computer readable storage medium having recorded thereon the computer program.

It is further provided a system comprising a processor coupled to a memory and optionally a graphical user interface, the memory having recorded thereon the computer program.

Other systems, methods, and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.
FIG. 1A is a schematic diagram of a data model for a modeled assembly created in the Resolved mode of a CAD environment.
FIG. 1B is a schematic diagram showing the data for the modeled assembly of FIG. 1A loaded into the CAD environment in Lightweight mode.
FIG. 1C is a schematic diagram showing data for the modeled assembly of FIG. 1A loaded into the CAD environment in LDR mode.
FIG. 2A is a CAD environment screenshot of an exemplary assembly in Resolved mode.
FIG. 2B is a CAD environment screenshot of the exemplary assembly of FIG. 2A in Lightweight mode.
FIG. 2C is a CAD environment screenshot of the exemplary assembly of FIG. 2A in LDR mode.
FIG. 3A is a schematic diagram showing the data added for a newly created part of a modeled assembly in a Resolved mode of the CAD environment.
FIG. 3B is a schematic diagram data of the modeled assembly of FIG. 3A after adding geometry data to the graphics data in LDR mode.
FIG. 3C is a schematic diagram showing the data of the modeled assembly of FIG. 3B showing dimension added to the graphics data in LDR mode.
FIG. 3D is a schematic diagram showing the data of the modeled assembly of FIG. 3C showing annotation added to the graphics data in LDR mode.
FIG. 4 is a flowchart of an exemplary method for adding dimensions and annotations in a CAD system to an assembly opened in a graphics only mode of a CAD.
FIG. 5 is a schematic diagram illustrating an example of a system for executing functionality of the present invention.
FIG. 6A is a schematic diagram of an assembly body depicted in LDR mode.
FIG. 6B is the schematic diagram indicating a selected edge of the assembly body of FIG. 6A as depicted in LDR mode.
FIG. 6C is a schematic diagram depicting a means for user selection of the selected edge of the body shown in FIG. 6A.
FIG. 7 is a schematic diagram of the body of FIG. 6A indicating the FaceIDs for planar faces abutting the selected edge.

### DETAILED DESCRIPTION

The following definitions are useful for interpreting terms applied to aspects of the embodiments disclosed herein, and are meant only to define elements within the disclosure.

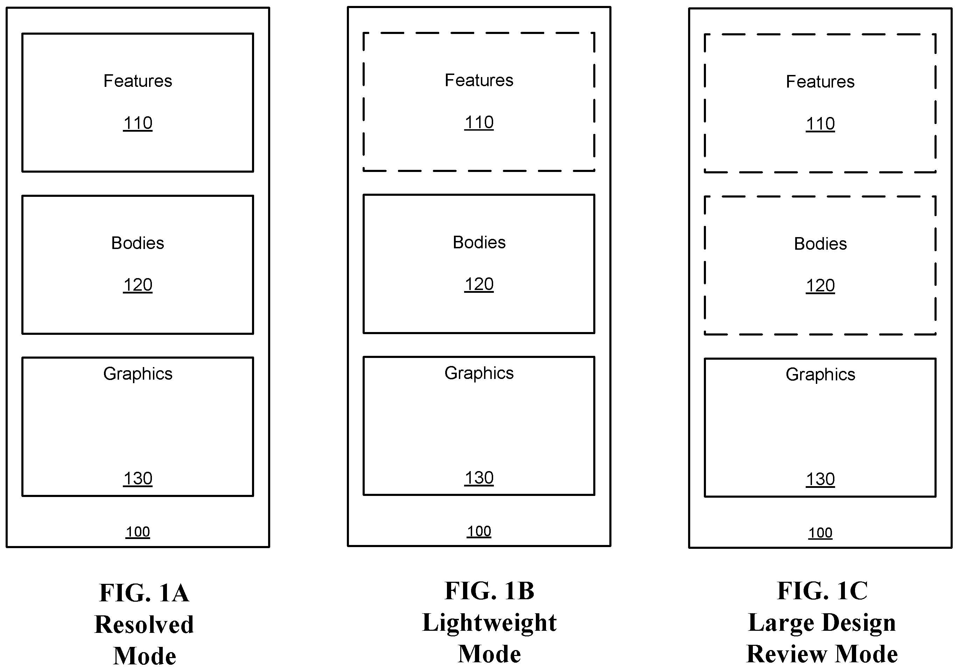

As used within this disclosure, a "modeled object" or a "modeled assembly" refers to a computer rendered representation of a physical structure, for example, a real-world product from the field of mechanical and/or electrical engineering. In general, the modeled object is represented by numerical data stored in data structures manipulated via a CAD system, which may be referred to has the CAD environment, where the modeled object may be represented by the CAD environment user interface, for example, graphically in two or three dimensions, and/ or via parts/components lists, among others. The data stored in a modeled assembly file 100 (FIGS. 1A-1C) is generally partitioned into three groups: features data 110, bodies data 120, and graphics data 130 (defined below). Common identifiers are used for similar aspects of the assembly to provide continuity across the modes.

As used within this disclosure, "feature" 110 (FIG. 1A) refers to instructions how the assembly is constructed, including sketches, properties such as whether the feature extrudes, sweeps, or revolves, assembly level mates, equations, and references identifying parts. Assembly features may include a specific geometric element of an assembly component, for example (but not limited to) a face, an edge, a vertex, and a reference point, axis, or a plane. Features may include dimensions of a face or edge, and user annotations applied to aspects of the assembly component.

As used within this disclosure, "bodies" refer to the surfaces resulting from the features, for example, an extruded circle becomes a cylinder. The bodies may be, for example, solid surfaces or mesh.

As used within this disclosure, a "face" refers to a flat or curved surface of a 3D modeled body. There may be several types of faces in an assembly, including (but not limited to) a planar face, a cylindrical face, a conical face, a toroidal face, and a spherical face. For example, a cube has six faces, a cylinder has three faces, and a sphere has just one face. When a body is created in a CAD environment, each face of the body is assigned identifiers for the face and the body the face is associated with, for example, a FaceID, a BodyID, and a FaceStringID (the surFaceID of the string).

As used within this disclosure, an "edge" refers to a boundary where two faces of a 2D or 3D modeled assembly intersect. There may be several types of edges in an assembly, including (but not limited to) a linear edge, a curved edge, a reference plane, a reference point, a circular edge, a spline, and an ellipse. A CAD environment assigns an edge identifier, e.g., EdgeID, for each edge and face identifier, e.g., FaceID, for each face of a body. Tessellation elements incorporating an edge include the EdgeID.

As used within this disclosure, "graphics" refers to a triangulated mesh of faces of the bodies stored as tessellation data. A tessellated face includes a multitude of triangular mesh elements.

As referred to within this disclosure, "tessellation data," and "graphics data" refer to data describing a model that has been tessellated for rendering. In computer graphics, tessellation refers to the dividing of a face into a dataset of polygons (typically triangles) for rendering. The tessellation data is a limited subset of the full assembly model data, but retains sufficient information to render the basic geometrical structure.

As referred to within this disclosure, a "tessellated entity" refers to a model or component of a model that has been tessellated for rendering.

As used within this disclosure, a "mode" refers to a method for controlling the scope of the modeled assembly data loaded by a CAD system or a viewer application. Different modes load different combinations of features, bodies, and graphics into the CAD environment. FIGS. 1A-1C illustrate three general modes.

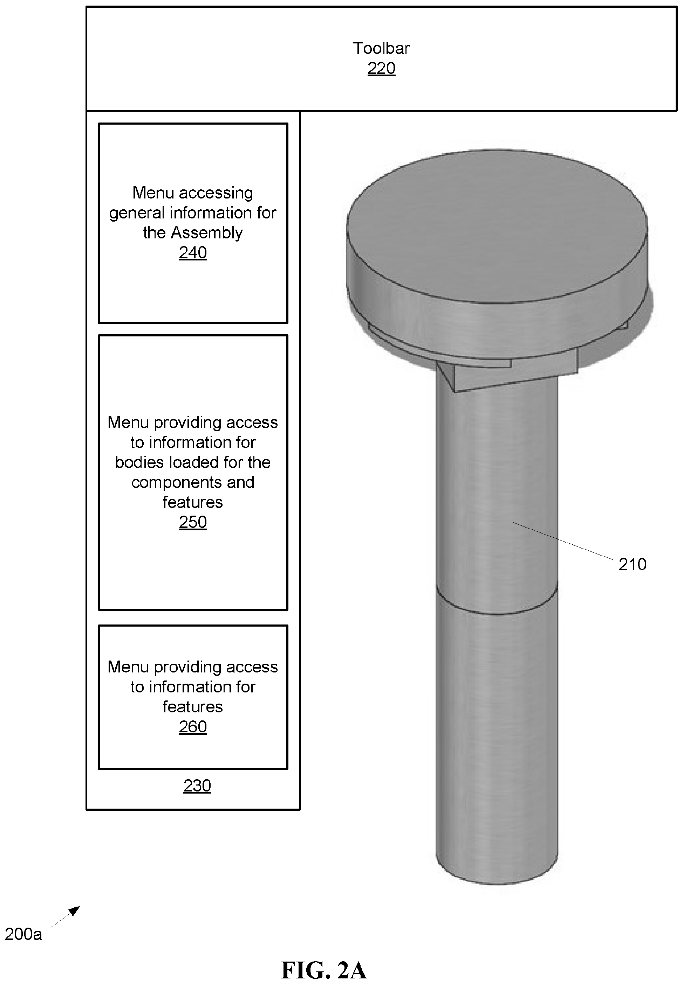

"Resolved mode" (FIG. 1A) refers to the most data intensive mode, where the CAD system loads features data 110, bodies data 120, and graphics data 130 for all of the assembly components. In Resolved mode the user can fully manipulate parameters of assembly components. Bodies 120 are produced in Resolved mode according to the parameters of Resolved mode. Likewise, the tessellation graphics data 130 is produced in Resolved mode. FIG. 2A shows screen shot 200a of an exemplary assembly 210 in Resolved mode, with a toolbar 220 and a side-bar 230 providing access to assembly information 240, bodies 250 (faces and edges) and features 260.

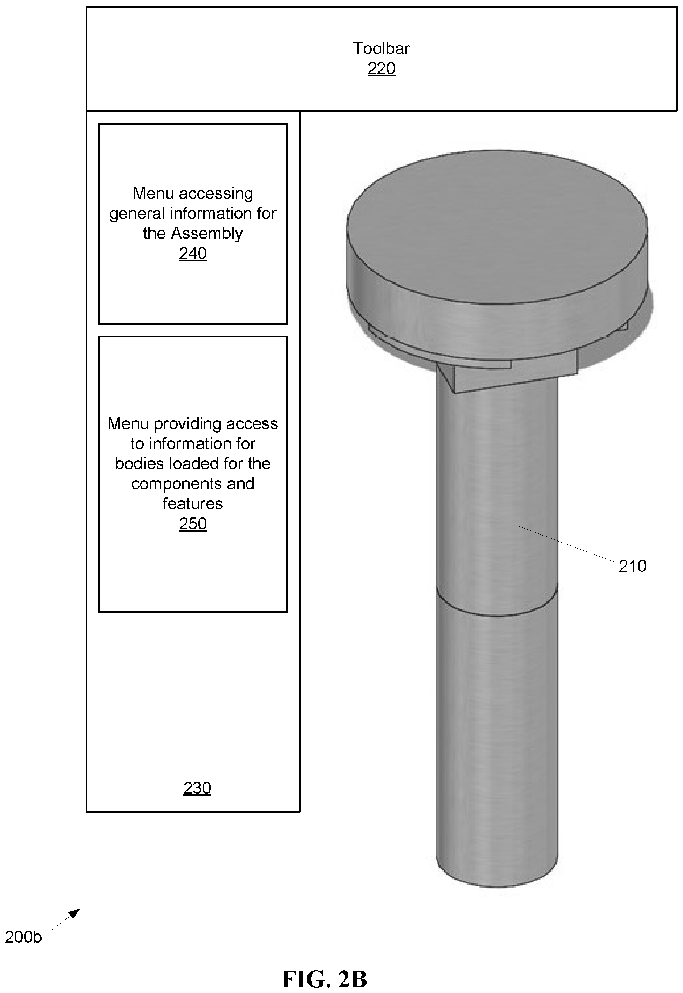

"Lightweight mode" (FIG. 1B) refers to a less data intensive CAD system mode that loads bodies data 120, and graphics data 130 for all of the assembly components but omits features 110 (show with a dashed line). FIG. 2B shows a screen shot 200b of an exemplary assembly 210 in Lightweight mode, with a toolbar 220 and a side-bar 230 providing access to assembly information 240, bodies 250 (faces and edges). The side-bar access to the features 260 (FIG. 2A) is not available as features are not loaded in Lightweight mode.

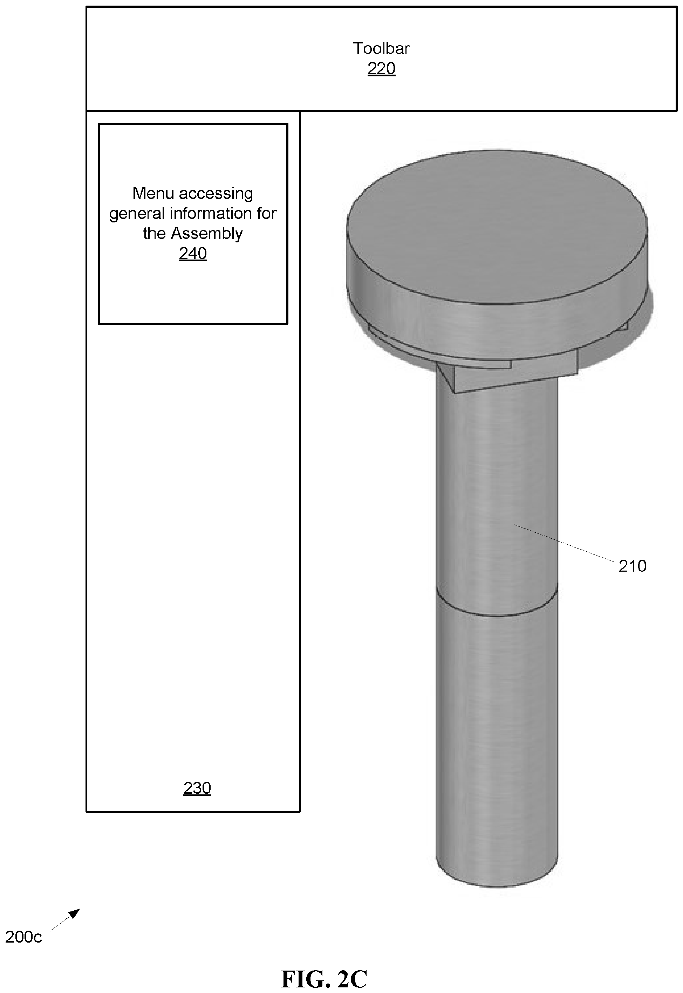

"Large Design Review (LDR) mode" (FIG. 1C) of a CAD system or viewer application loads for graphics data120, but does not load features data 110 and bodies data 120. In LDR mode, a modeled assembly only opens/accesses tessellation graphics data 130 for the assembly file 100. FIG. 2C shows a screen shot 200c of an exemplary assembly 210 in LDR mode, with a toolbar 220 and a side-bar 230 providing access to assembly information 240. The side-bar access to the features 260 (FIG. 2A) and bodies 250 (FIG. 2A-2B) is not available, as features and bodies are not loaded in Lightweight mode.

As used within this disclosure, a viewer application refers to a computer based application that renders tessellation for an assembly and displays the assembly on a display screen. Like LDR mode of a CAD system, a viewer application typically loads the tessellation data (graphics data 130) for an assembly without loading assembly feature data 110 or the bodies data 120. For example, a viewer application may be used to view an assembly in a memory limited computing device, such as a tablet computer or smart phone. In general, the embodiments described herein are directed to functionality added to previously existing LDR mode.

As used within this disclosure, a "reference" or "reference point" of a modeled object refers to a data structure describing location of an identifiable feature of a component of the modeled object, for example, a location within the component with respect to a known location, such as an origin of a coordinate system. The reference may indicate specific geometrical properties of the feature, for example, stored in a descriptor table. A reference plane is a type of reference geometry. Reference geometry is used to help define a parametric 3D model, without impacting the solid/surface geometry of the model. For example, a reference plane might be used to define symmetry of a part, meaning features on one side can be mirrored about the plane, to the other side of the part. Other common types of reference geometry include reference axes, reference points, and coordinate systems.

As used within this disclosure, a "descriptor" refers to a data structure of a CAD system that stores features data 110 and bodies data 120. For example, features data 110 may include descriptors for features, and bodies data 120 may include descriptors for bodies. Descriptors may describe the properties of a local region of geometry within the modeled assembly in a CAD system, for example, faces and edges, among others. A descriptor may include both text fields and numerical fields, as well as fields indicating relationships with other components and/or structural features. This usage of the term 'descriptor' is common in data retrieval systems. For example, in image retrieval systems, descriptors contain the structural and/or visual features of images such as shape, color or texture that help classify images.

As used within this disclosure, a "string" refers an association between different types of data for a modeled part of the assembly, for example, a feature string, a configuration string, and a graphics data string. The faceStringID is stored in the graphics data string that is associated with the assembly. The faceStringID for a particular face is same in all different modes of opening the assembly along with the component associated with the faceStringID. This provides a single face identifier across all the modes for opening an assembly.

As used within this disclosure, a "reference entity" refers to a data structure in Resolved mode or Lightweight mode that associates reference data such as annotations or dimensions with the FaceID or the EdgeID.

As used within this disclosure, a "hit item" refers to a face or an edge indicated by a user via a user interface action, for example, a mouse click on a face or an edge, or drawing a loop (or lasso) around the face or edge.

Reference will now be made in detail to embodiments of the present invention, examples of which are illustrated in the accompanying drawings. Wherever possible, the same reference numbers are used in the drawings and the description to refer to the same or like parts.

The data associated with a modeled assembly in a CAD development environment ("CAD system") may be large, for example 1 GB or larger, particularly for a complex assembly. The CAD system typically partitions different types of data separately. For example, for the Dassault Systèmes SOLIDWORKS^{®}, the data is broadly divided into features data 110, bodies data 120, and graphics data 130. Here, the data includes a faceStringID that provides cross-referencing of data for features, bodies, and graphics. The CAD system may be opened in different modes that load one or more of these data types depending upon the task at hand. For example, in SOLIDWORKS^{®} a Resolved mode creates and loads feature data 110, bodies data 120, and graphics data 130.

In Resolved mode, the CAD system user can edit an assembly, for example, using layout sketches. The user typically constructs one or more sketches showing where each assembly component belongs. Then, the user can create and modify the assembly before or during the manufacturing process. While such layout drawings include bodies and faces of the components of the assemblies, the graphics generated for LDR mode instead are based on tessellation data. The tessellation data consists of point graphics data for each face of the resolved body, so the embodiments need not load features/bodies of the assembly components of the assemblies to generate drawings.

In Lightweight mode (FIG. 1B), only the bodies data 120 and graphics data 130 are loaded. In LDR mode (FIG. 1C), only graphics data 130 is loaded. LDR mode has primarily been used to present views of the assembly, while previously adding dimensions and/or annotations to the data required loading the assembly in Resolved mode or Lightweight mode. The exemplary embodiments are directed to methods for adding dimensions and/or annotations to features in LDR mode. While the description of the embodiments refers to examples in SOLIDWORKS^{®}, the method is applicable to other CAD systems.

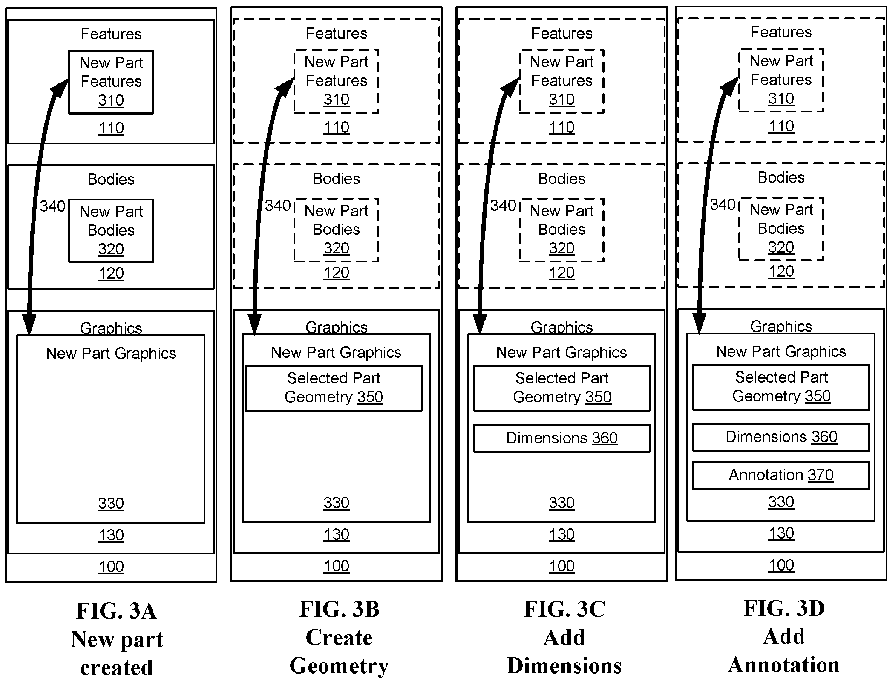

For example, FIG. 3A shows that when a new part is created in Resolved or Lightweight mode, data 310, 320, 330 for the new part is created, added to the features data 110, the bodies data 120, and the graphics (tessellation) data 130, and saved by SOLIDWORKS^{®} in the assembly file 100. SOLIDWORKS^{®} saves graphics data 130 with the IDs of bodies, faces, edges, and features to facilitate the correct identification of entities. Here, the tessellation data 130 created in Resolved or Lightweight mode stores the point information of all of the faces along with:
a) a FaceID,
b) a BodyID, and
c) a FaceStringID (the surFaceID of the string).
The embodiments use these IDs to identify dimensions and annotations when creating the drawing for assemblies opened in LDR mode as well as when opening the drawing from the Resolved model after the annotations and the dimensions have been created and saved in LDR mode.

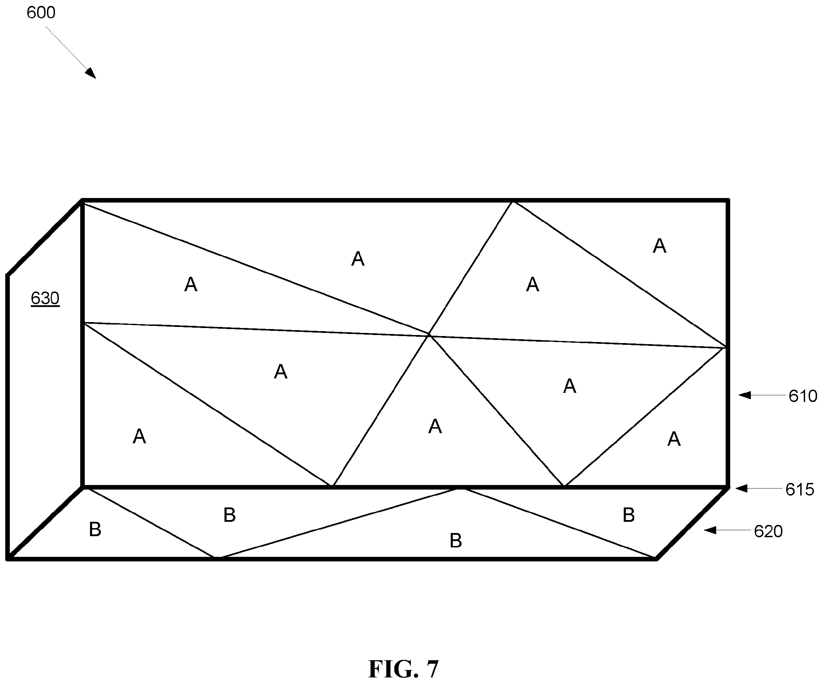

In LDR mode (FIG. 1C), SOLIDWORKS^{®} loads the graphics data 130 but does not load the bodies data 120 or the features data 110. Therefore, LDR mode does have access to most data for bodies, faces, edges, and vertices. The graphics data has tessellation data of all the faces on all the bodies in the components of the model. Tessellated data represents a face of a part as a mesh of small, non-overlapping polygons, typically triangles, which fit together without gaps or overlaps (see FIG. 7).

Because LDR mode loads only the graphics data contained in the top assembly, large assemblies may be loaded in significantly less time than loading assemblies in Lightweight mode or Resolved mode. For example, if the Resolved assembly takes an hour to open the features data 110, the bodies data 120, and the graphics data 130, opening only the graphics data 130 in LDR mode takes much less time, for example, between 2 and 5 minutes. This graphics data 130 is created or modified whenever the assembly is saved in any mode. Many functionalities of SOLIDWORKS^{®} are not available in LDR mode since LDR does not load body data 120.

Under the present embodiments, annotations and/or dimensions may be added and edited in LDR mode. Since dimensions are related to geometrical entities not present in the graphics data of LDR mode, creating dimensions and/or annotations in LDR mode involves producing geometrical entities such as edges, or vertices from the graphics data 130.

Bodies (body representations) are loaded both in Resolved and Lightweight mode when creating drawings for assemblies. The bodies provide the complete information about faces, including their geometry information. The faces provide information about the edges of the face or the common (intersecting) edge of two faces. The vertices information can be gathered from the edge data. This facilitates creating of drawing views and creation of any annotation or dimensions on selected edges of drawing views.

Drawing views are created in drawings of SOLIDWORKS^{®} using the tessellation data, for example, when the assembly associated is loaded in LDR mode. When saving an assembly in Resolved or Lightweight modes, the tessellation data accessible in LDR mode includes the following data:
1. A unique BodyID for each body,
2. a unique FaceID and faceStringID for each face,
3. the face type (planar, cylindrical, spherical, etc.) for each FaceID,
4. additional face information. For example, if the face is planar the additional information includes the root point and the normal to the face, and
5. a unique EdgeID for each edge.

This data is available as part of the tessellation data when loading the assembly in LDR mode for creating the drawing views under the present embodiments. LDR mode provides for user selection of an edge. Whenever a tessellated entity is selected in LDR mode, an edge for example, the embodiments identify the edge and create a geometrical entity using the saved tessellation data 130. The edge geometrical entity is created for a selected linear tessellated edge with the edge start point and the edge end point which were saved with the tessellation data in Resolved or Lightweight mode. The embodiments use this geometrical entity when creating dimensions and/or annotations associated with the selected edge.

For example, a model of an extruded rectangle (see FIG. 7) has four planar surfaces and 12 edges. In LDR mode, the CAD system has access to the (tessellation) graphics data 130 (FIG. 1A). The embodiments create a geometry for a selected geometric feature of the cube, for example, creating geometric data for a first planar face from the tessellation face data and create geometric data for one or more of its corresponding edges from the tessellation data. The FaceID for the created geometric face is the same as the FaceID in the Resolved data, and likewise, the EdgeID for the created geometric face.

The dimensions and annotations created in LDR mode are available when the assembly is loaded Resolved or Lightweight modes. These dimensions and annotations are persistent. When the geometrical entities needed for dimensions and annotations are loaded in LDR mode, the following dimension and annotation information is added to the geometrical entity:
1 ) Component information indicating which assembly component the real face and edge correspond to the created geometrical entity, and
2) the BodyID, FaceID, type of face, and EdgeID information.
When a drawing created from an LDR assembly is saved, the BodyID, FaceID, type of face, and EdgeID information is also saved. When such a saved SOLIDWORKS^{®} document is reopened in Resolved or Lightweight mode, the actual face/edge or vertex in the correct component is identified using the saved information. The annotations and dimensions added to the tessellation data in LDR mode are also created as dimension and annotation reference entities the in the Resolved mode data. The reference entities are associated with the corresponding BodyID, FaceID, and EdgeID. The dimension value and annotation data is the same in Resolved mode as when it was created in LDR mode. Hence, dimensions and annotations created for assemblies in LDR mode are available in Resolved or Lightweight mode and vice-versa. The types of faces (and associated edges) for dimensioning or annotation in LDR mode include planar, cylindrical, spherical, conical, and toroidal.

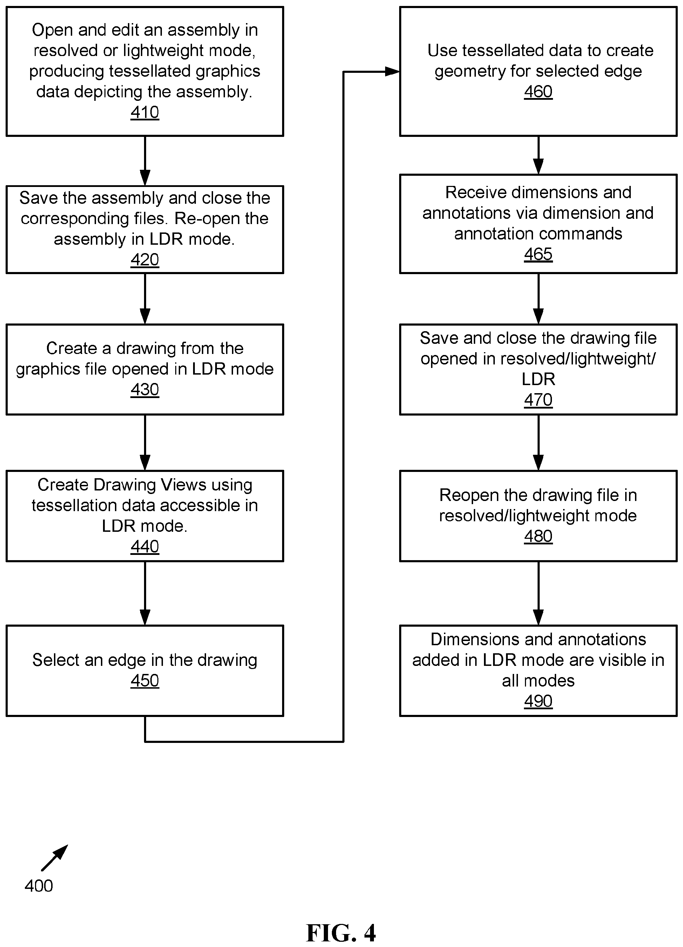

FIG. 4 is a flowchart illustrating a method for adding dimensions and annotation to graphics data for an assembly in a computer aided drafting (CAD) environment. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention. The method is described with reference to FIGS. 1A-1C, 3A-3D, 6A-6C, and 7.

A file for an assembly is opened and edited in a first mode such as Resolved mode of a CAD environment that loads data for features 110 (FIG. 1A) and bodies 120 (FIG. 1A) for parts of the assembly, as shown by block 410. Alternatively, the assembly may be opened in Lightweight mode which loads data for bodies 120 (FIG. 1B) of parts of the assembly. The user saves the tessellation graphics data 130 (FIGS. 1A, 1B) and closes the assembly file 100 (FIGS. 1A-1B), as shown by block 420. For example, if a new part is added to the assembly, feature data for the new part 310 (FIG. 3A) is stored with the feature data 110, bodies data 320 (FIG. 3A) for the new part is added to the bodies data 120, and graphics data for the new part 330 (FIG. 3A) is added to and saved with the graphics data 130 in the assembly file 100. The identifiers (for example, FaceIDs and EdgeIDs) for the new part are included in the new part features 310, new part bodies 320, and new part graphics 330, as shown by FIG. 3A, forming a continuity string 340 using the same IDs across the new part features 310, new part bodies 320, and new part graphics 330.

The assembly file 100 is re-opened in a second CAD environment mode such as LDR mode (FIG. 1C). The second CAD environment mode loads the tessellation data 130 without loading the features data and the bodies data, as shown by block 420. A drawing file is created based on the tessellation data, as shown by block 430.

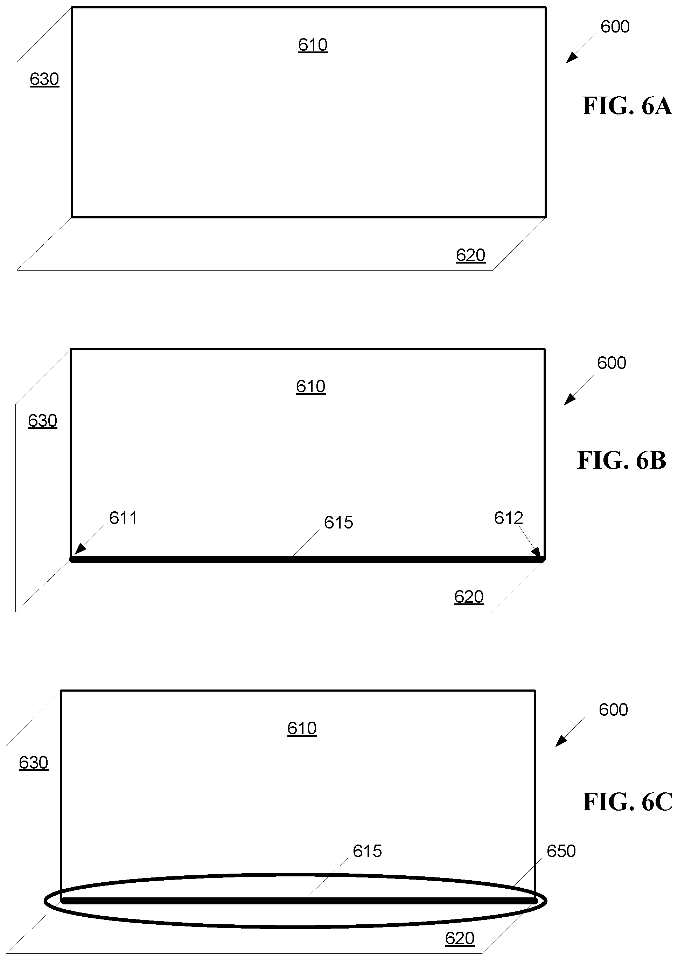

A drawing view of at least a portion of the assembly is displayed in the second CAD environment mode, as shown by block 440. For example, FIG. 6 shows a simple block shaped body having a first planar face 610, a second planar face 610, and a third planar face 630.

A user selection of an edge 615 (FIG. 6B) is received from the user via a graphics user interface displaying the drawing view, as shown by block 450. Here, the user selects the edge in the drawing view where the selected edge corresponds to a tessellation edge. The selected edge 615 is a boundary of at least one face of the assembly. Here, the selected edge 615 is the boundary between the first planar face 610 and the second planar face 620. For a non-limiting example, the user may select the selected edge 615 by using a lasso selection tool 650 (FIG. 6C), or by clicking on the selected edge 615 with a mouse, trackpad, or touchpad, amongst other selection means. In other instances, the selected edge may serve as a boundary of, for example, a cylindrical face, a conical face, a toroidal face, or a spherical face.

A geometry is determined for the selected edge 615 from the tessellation data, as shown by block 460. For example, the geometry may be determined from the tessellation data using triangulation and/or polyline approximation (where a curve is approximated with line segments, the vertex data defines the endpoints of the line segments). As noted previously, the tessellation data represents a mesh of triangular surfaces created in the first mode (Resolved mode or Lightweight mode), as shown by FIG. 7. The tessellation data includes a data structure representing each triangular mesh element. When the Resolved mode creates the tessellation data, the tessellation data includes a BodyID, FaceID, EdgeID, and type of face data for each tessellation element. For example, each triangular mesh element includes a unique identifier (FaceID) for the face the mesh element belongs to, shown in FIG. 7 with the letter A representing the FaceID for the mesh elements for the first planar face 610, and the letter B representing the FaceID for the mesh elements for the second planar face 620 Here, the EdgeID for the selected the edge 615 is extracted from the corresponding tessellation data. The CAD environment may indicate the selected edge 615 by thickening the edge line, or by highlighting the selected edge 615 with a color.

The type of geometry for the selected edge 615 is based on the tessellation data associated with the selected edge. For example, here the selected edge 615 is a line and the geometry for the selected edge includes a first endpoint 611 of the edge 615 and a second endpoint 612 of the edge 615. For a cylindrical face, the selected edge may be a circle, such that the geometry for the selected edge includes a center point and a radius.

Returning to FIG. 4, an annotation and/or a dimension to associate with the selected edge 615 is received, as shown by block 465. For example, the annotation may be a text string such as "lower front edge," and the dimension may be a text string such as "17 cm." The user may enter the dimension or annotation using an existing dimension/annotation tool provided for Resolved mode and Lightweight mode. Here the user may enter a dimension with the CAD system dimension command and/or the user may use the CAD system draw annotation command to enter an annotation. The dimensions and annotations received from the user are added to the graphics (view) data 130 and displayed in the drawing view.

The dimension data 360 (FIG. 3C) or annotation data 370 (FIG. 3D) is saved with the graphics data 130 (tessellation data) as shown by block 470. Thereafter the assembly file 100 may be closed. The dimension data 360 and annotation data 370 is tagged with an identifier for the selected edge (EdgeID). The EdgeID for the selected edge is the same as the EdgeID identifier in the new bodies data 120 and the features data 110. The assembly file is re-opened in Resolved or Lightweight mode, as shown by block 480, where the annotation and/or the dimension in the tessellation data is detected and may be accessed and displayed, as shown by block 490. Here, the annotation/dimension data stored with the tessellation data is incorporated into a reference entity in Resolved or Lightweight mode.

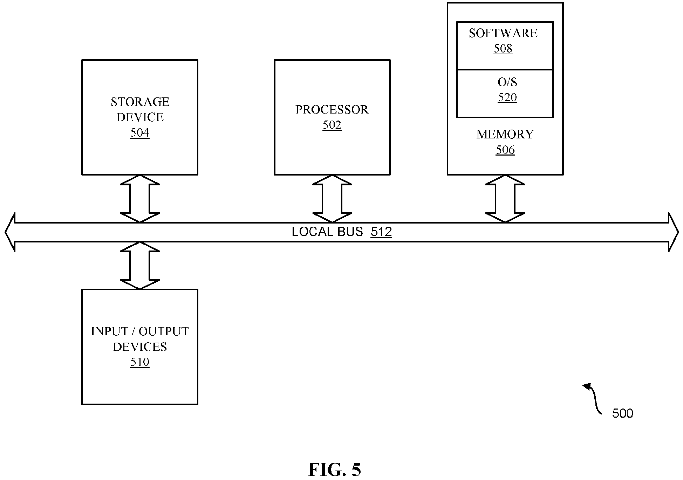

The present system for executing the functionality described in detail above may be a computer, an example of which is shown in the schematic diagram of FIG. 5. The system 500 contains a processor 502, a storage device 504, a memory 506 having software 508 stored therein that defines the abovementioned functionality, input, and output (I/O) devices 510 (or peripherals), and a local bus, or local interface 512 allowing for communication within the system 500. The local interface 512 can be, for example, but not limited to one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components.

The processor 502 is a hardware device for executing software, particularly software stored in the memory 506. The processor 502 can be any custom made or commercially available single core or multi-core processor, a central processing unit (CPU), an auxiliary processor among several processors associated with the present system 500, a semiconductor based microprocessor (in the form of a microchip or chip set), a microprocessor, or generally any device for executing software instructions. While FIG. 5 shows the processor as a single unit, alternatively the processor may include two or more processing units distributed across two or more locations, for example, communicating via a communication network in addition to or in place of the local interface 512.

The memory 506 can include any one or combination of volatile memory elements (*e.g.*, random access memory (RAM, such as DRAM, SRAM, SDRAM, *etc*.)), volatile memory elements (*e.g.*, a hard drive, a solid state drive (SSD), a flash drive, an optical drive, tape) and nonvolatile memory elements (*e.g.*, ROM, CDROM, *etc*.). Moreover, the memory 506 may incorporate electronic, magnetic, optical, holographic, and/or other types of storage media. Note that the memory 506 can have a distributed architecture, where various components are situated remotely from one another, but can be accessed by the processor 502.

The software 508 defines functionality performed by the system 500, in accordance with the present invention. The software 508 in the memory 506 may include one or more separate programs, each of which contains an ordered listing of executable instructions for implementing logical functions of the system 500, as described below. The memory 506 may contain an operating system (O/S) 520. The operating system essentially controls the execution of programs within the system 500 and provides scheduling, input-output control, file and data management, memory management, and communication control and related services.

The I/O devices 510 may include input devices, for example but not limited to, a keyboard, mouse/trackpad, haptic sensor, touchscreen, scanner, microphone, barcode reader, QR code reader, *etc.* Furthermore, the I/O devices 510 may also include output devices, for example but not limited to, a printer, display (2D, 3D, virtual reality headset), transducer, etc. Finally, the I/O devices 510 may further include devices that communicate bidirectionally via both inputs and outputs or a combined interface such as a full duplex serial bus (for example, a universal serial bus (USB)), for instance but not limited to, an interface for accessing another device, system, or network), a wireless transceiver, a copper, optical or wireless telephonic interface, a bridge, a router, or other device. The outputs may include an interface to control a manufacturing device, such as a 3D printer, a computerized numerical control (CNC) machine, and/or a milling machine, among others*.*

When the system 500 is in operation, the processor 502 is configured to execute the software 508 stored within the memory 506, to communicate data to and from the memory 506, and to generally control operations of the system 500 pursuant to the software 508, as explained above.

The method in the embodiments described above in the context of LDR mode may alternatively be performed by a CAD graphics viewer application that may be a stripped down CAD environment that only loads and manipulates graphics data, and does not load features and/or bodies data. Such a graphics viewer application may be suitable for use in a portable computer, a tablet computer, or a smart phone that typically has insufficient memory and/or processing power to host a full CAD environment.

The ability to add dimensions and/or annotations to the graphics data as per the described embodiments facilitates the production and manufacture of the assembly. For example, if a worker at a manufacturing site needs to annotate or add dimensions to a portion of an assembly (for example, "this part is sometimes failing during manufacture," or "the tolerances for this part need to be adjusted: use these dimensions instead"), it may be impractical or impossible to load a fully resolved model in a portable computing device (available at a remote manufacturing or installation site) that may have insufficient memory or processing bandwidth to load the assembly in Resolved mode. Alternatively, even if the computer is able to load the assembly in Resolved mode, the additional time it takes to load the assembly in Resolved mode may discourage or prevent entry of dimensions and/or annotations.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for adding dimensions and annotations to an assembly file for an assembly created or edited in a first mode of a computer aided drafting (CAD) environment that saves features data for features of the assembly to the assembly file and/or saves bodies data for bodies of the assembly to the assembly file, and saves tessellation data representing the assembly to the assembly file, comprising:
opening the assembly file in a second CAD environment mode that loads the tessellation data from the assembly file without loading the features data and the bodies data;
creating a drawing view of at least a portion of the assembly using the tessellation data;
receiving a selection of a selected edge in the drawing view;
determining a geometry for the selected edge;
receiving an annotation or a dimension to associate with the selected edge; and
saving the annotation or dimension with the tessellation data.

2. The method of claim 1, wherein the selected edge comprises a boundary of a face of the assembly and optionally wherein the face is one of a group consisting of a planar face, a cylindrical face, a conical face, a toroidal face, and a spherical face.

3. The method of claim 1 or 2, wherein determining the geometry for the selected edge is based on the tessellation data associated with the selected edge.

4. The method of claim 3, wherein the selected edge is:
- a line and the geometry for the selected edge comprises a first line endpoint and a second line endpoint; or
- a circle and the geometry for the selected edge comprises a center point and a radius.

5. The method of any one of claims 1 to 4, wherein annotation or dimension data is associated with an identifier for the selected edge and optionally wherein the identifier for the selected edge is the same as an identifier of the edge in the bodies data.

6. The method of any one of claims 1 to 5, further comprising re-opening the assembly file in the first mode of the CAD environment and accessing the annotations and/or the dimensions in the tessellation data.

7. The method of any one of claims 1 to 6, wherein the tessellation data comprises point data for creating a view of a mesh surface of the assembly.

8. The method of any one of claims 1 to 7, further comprising creating a drawing file from the tessellation data.

9. A computer readable storage medium storing non-transitory instructions which, when executed by a computer, cause the computer to perform a method that adds a dimension and/or annotation to tessellation data for an assembly in a computer aided drafting (CAD) viewer application, comprising:
receiving and loading an assembly file comprising the tessellation data created in a CAD environment;
creating a drawing view of at least a portion of the assembly using the tessellation data;
receiving a selection of a selected edge in the drawing view;
determining a geometry for the selected edge from the tessellation data;
receiving an annotation or a dimension to associate with the selected edge; and
saving the annotation or dimension with the tessellation data,
wherein the CAD viewer application loads the tessellation data for the assembly without loading data for assembly features or data for assembly bodies.

10. The computer readable storage medium of claim 9, wherein the tessellation data comprises tessellation point data for creating the drawing view.

11. The computer readable storage medium of claim 9 or 10, wherein the selected edge comprises a boundary of a face of the assembly and optionally wherein the face is selected from a group consisting of a planar face, a cylindrical face, a conical face, a toroidal face, and a spherical face.

12. The computer readable storage medium of any one of claims 9 to 11, wherein determining the geometry for the selected edge is based on point data associated with the selected edge.

13. A computer aided drafting (CAD) viewer application configured to execute instructions stored in a computer memory for execution by a processor, comprising:
receiving and loading an assembly file comprising tessellation data for depicting an assembly created in a CAD environment;
creating a drawing view of at least a portion of the assembly using the tessellation data;
receiving a selection of an edge of the assembly in the drawing view;
determining a geometry for the selected edge from the tessellation data;
receiving an annotation or a dimension to associate with the selected edge; and
saving the annotation or dimension with the tessellation data,
wherein the CAD viewer application loads the tessellation data without loading data for assembly features or data for assembly bodies.

14. The CAD viewer application of claim 13, wherein the tessellation data comprises tessellation point data for creating the drawing view.

15. The CAD viewer application of claim 13 or 14, wherein the selected edge comprises a boundary of a face of the assembly and optionally wherein the face is selected from a group consisting of a planar face, a cylindrical face, a conical face, a toroidal face, and a spherical face.

16. The CAD viewer application of any one of claims 13 to 15, wherein determining the geometry for the selected edge is based on point data associated with the selected edge.
